# EUROPÄISCHE PATENTSCHRIFT

(11) **EP 1 065 130 B1**
(45) Veröffentlichungstag und Bekanntmachung des Hinweises auf die Patenterteilung: **18.08.2004**
(21) Anmeldenummer: 00113497.2
(22) Anmeldetag: 26.06.2000
(51) Int. Cl.: B62D 1/04

(54) **Bedienpult für ein Flurförderzeug**
Control panel for an industrial truck
Panneau de commande pour un chariot de manutention

(30) Priorität: 29.06.1999 DE 19929797
(43) Veröffentlichungstag der Anmeldung: 03.01.2001
(73) Patentinhaber: Still Wagner GmbH & Co. KG, 72760 Reutlingen (DE)
(72) Erfinder: Meinhardt, Michael, Dipl.-Ing., 72760 Reutlingen (DE)
(74) Vertreter: Kasseckert, Rainer

(56) Entgegenhaltungen:
- DE-A- 1 950 361
- DE-A- 3 434 548
- US-A- 1 901 171
- US-A- 2 187 764

## Beschreibung

Die Erfindung betrifft ein Bedienpult für ein Flurförderzeug, mit einem auf dem Bedienpult angeordneten Betätigungselement für die Lenkung des Flurförderzeugs, wobei das Betätigungselement drehbar um eine erste Achse an dem Bedienpult befestigt ist und an dem Betätigungselement ein zumindest teilweise um eine zweite Achse drehbares Griffelement befestigbar ist, wobei die zweite Achse von der ersten Achse beabstandet ist und mindestens zwei unterschiedliche Griffelemente vorgesehen sind, die wahlweise an dem Betätigungselement befestigbar sind, wobei ein erstes Griffelement vorgesehen ist, das als Knauf ausgebildet ist.

Die Erfindung betrifft ebenfalls ein Flurförderzeug mit einem Bedienpult, mit einem auf dem Bedienpult angeordneten Betätigungselement für die Lenkung des Flurförderzeugs, wobei das Betätigungselement drehbar um eine erste Achse an dem Bedienpult befestigt ist und an dem Betätigungselement ein zumindest teilweise um eine zweite Achse drehbares Griffelement befestigbar ist, wobei die zweite Achse von der ersten Achse beabstandet ist

Bedienpulte von Flurförderzeugen müssen besonderen Anforderungen genügen, die sich aus den speziellen Einsatzbedingungen eines Flurförderzeugs ergeben. Beispielsweise bei Kommissioniergeräten, z.B. Hochregalkommissionierern, werden sämtliche Funktionen des Flurförderzeugs mit dem im Bereich eines Fahrerstands angeordneten Bedienpult gesteuert. Das Bedienpult weist beispielsweise ein Betätigungselement für eine Lenkung des Flurförderzeugs auf, das häufig als Lenkrad oder als drehbare Scheibe ausgeführt ist. Um ein sicheres Lenken in allen Betriebssituationen zu ermöglichen, ist an dem Betätigungselement häufig als Griffelement ein Knauf befestigt, der einhändig greifbar ist.

Neben dem Steuern des Fahrzeugs ist eine weitere Aufgabe der Bedienperson eines Kommissionierers das Kommissionieren von Waren, wobei diese Waren in der Regel von Hand zwischen einem Regal und einem mit dem Flurförderzeug angehobenen Lastaufnahmemittel, z.B. einem Behälter oder einer Palette, bewegt werden. Für dieses Kommissionieren ist es wichtig, daß das Bedienpult im Bereich des Fahrerstands möglichst wenig Platz beansprucht. Weiterhin ist es wichtig, daß das Bedienpult und die darauf angeordneten Bedienelemente derart angeordnet sind, daß sie die Bedienperson beim Kommissionieren nicht behindern und trotzdem ergonomisch günstig angeordnet sind.

Bei Hochregalkommissionierem ist es beispielsweise bekannt, daß das Bedienpult im Fahrerstand wahlweise hubgerüstseitig oder lastseitig angeordnet werden kann, wobei bei bestimmten Geräten das Bedienpult durch die Bedienperson selbst versetzt werden kann. Bei lastseitiger Anordnung befindet sich das Bedienpult zwischen der Bedienperson und dem Lastaufnahmemittel, weshalb sich die Bedienperson häufig nach vorne über das Bedienpult hinweg beugen muß. Hierbei wirken vor allem solche Bedienelemente störend, die deutlich über die Oberfläche des Bedienpults hinausragen, wie beispielsweise der Knauf eines Lenkbetätigungselements.

Aus US1901171 A ist ein Lenkrad mit auswechselbaren, drehbaren oder drehfesten Griffknaufen in verschiedenen Formen bekannt; eine flache Scheibe als drehbares Griffelement auf einem Lenkradkranz ist in DE3434548A offenbart.

Der Erfindung liegt daher die Aufgabe zugrunde, ein Bedienpult und ein Flurförderzeug mit einem Bedienpult zur Verfügung zu stellen, das gleichermaßen lastseitig und hubgerüstseitig einsetzbar ist und in jeder Stellung eine ergonomisch günstige Bedienung ermöglicht.

Diese Aufgabe wird bezüglich des Bedienpults erfindungsgemäß durch die kennzeichnenden Merkmale des Anspruchs 1 gelöst. Die Griffelemente zur Betätigung der Lenkungsvorrichtung können hierbei durch die Bedienperson ausgetauscht werden. Es kann somit stets das für die jeweilige Betriebssituation vorteilhafte Griffelement verwendet werden. Das Griffelement ist hierbei auf das Betätigungselement aufsteckbar und ist gegenüber dem Betätigungselement um die zweite Achse, welche die Mittelachse des Griffelements darstellt, drehbar. Ein erstes Griffelement ist als Knauf ausgebildet. Der Knauf weist eine Bauhöhe von ca. 70 Millimetern auf und kann von der Bedienperson mit der gesamten Hand gegriffen werden, was ein sicheres einhändiges Lenken des Flurförderzeugs erlaubt. Der Knauf weist hierbei die beispielsweise bei Lenkrädern von Arbeitsmaschinen üblicherweise verwendete Form auf und wird vorzugsweise dann eingesetzt, wenn das Bedienpult hubmastseitig angeordnet ist. Erfindungsgemäß ist in zweites, alternativ zum Knauf montierbares Griffelement vorgesehen, dessen Bauhöhe gegenüber dem Betätigungselement höchstens 30 Millimeter beträgt. Der Vorteil des zweiten Griffelements gegenüber dem Knauf besteht insbesondere darin, daß es den Fahrer aufgrund seiner geringen Bauhöhe nicht behindert, wenn er sich über das Bedienpult nach vorne beugt. Das zweite Bedienelement wird deshalb insbesondere an ein zwischen dem Fahrerstand und dem Lastaufnahmemittel angeordnetes Bedienpult montiert.

Wenn das zweite Griffelement eine Auflagefläche für den Handballen einer Bedienperson aufweist, kann das Bedienelement mittels des zweiten Griffelements mit einer Hand gedreht werden. Die Bedienperson legt dabei den Handballen auf die vorzugsweise konkave Auflagefläche auf und kann damit durch Drehen des Bedienelements das Flurförderzeug lenken.

Die eingangs genannte Aufgabe wird für das Flurförderzeug durch die kennzeichnenden Merkmale des Anspruchs 3 gelöst. Die Bedienperson kann den Handballen auf die Auflagefläche auflegen und hierdurch die Drehbewegung des Bedienelements für die Lenkungsvorrichtung exakt kontrollieren. Hierbei findet keine Drehbewegung zwischen der Hand der Bedienperson und dem Griffelement statt, während das Griffelement relativ zu dem Bedienelement rotiert.

Eine besonders gute Kontrolle der Lenkung des Flurförderzeugs ist möglich, wenn die Auflagefläche eine konkave Form aufweist.

Hierbei ist die Auflagefläche im wesentlichen senkrecht zur zweiten Achse ausgerichtet Über die konkave Auflagefläche kann somit in jeder Richtung quer zur Achse die gleiche Kraft ausgeübt werden.

Weiterhin ist es zweckmäßig, daß die Auflagefläche von der zweiten Achse im wesentlichen mittig geschnitten wird. Die Auflagefläche ist somit zur zweiten Achse symmetrisch und verändert bei Ihre Lage bezüglich der zweiten Achse nicht, wenn sie um die zweite Achse gedreht wird.

Weitere Vorteile und Einzelheiten der Erfindung werden anhand des in den schematischen Figuren dargestellten Ausführungsbeispiels näher erläutert. Dabei zeigt
- Figur 1: ein erfindungsgemäßes Bedienpult,
- Figur 2: ein Griffelement mit einer Auflagefläche für den Handballen,
- Figur 3: ein als Knauf ausgeführtes Griffelement.

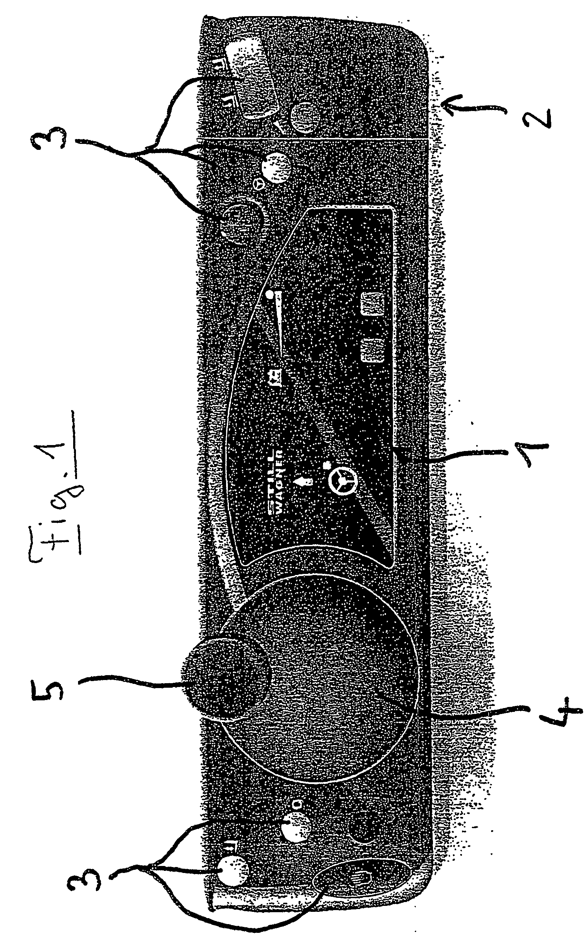

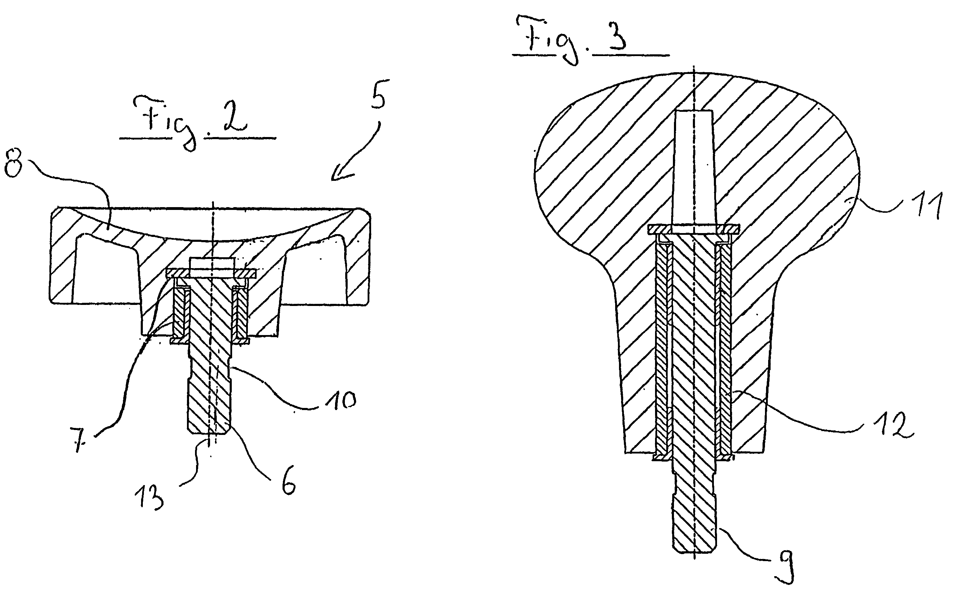

Figur 1 zeigt ein erfindungsgemäßes Bedienpult, das in dem Fahrerstand eines Hochregalkommissionierers wahlweise lastseitig oder hubgerüstseitig angeordnet werden kann. Das Bedienpult weist ein Anzeigedisplay 1 auf, auf welchem verschiedene Daten über den Betriebszustand des Fahrzeugs dargestellt werden. Der rechte Endabschnitt 2 des Bedienpults kann um eine längs zum Bedienpult ausgerichtete Achse nach oben und unten geschwenkt werden. Durch eine solche Bewegung des Endabschnitts 2 wird ein Fahrantrieb angesteuert. Im Bereich der seitlichen Enden des Bedienpults befinden sich zahlreiche Bedienelemente 3, mit welchen die Funktionen des Hubgerüsts und weitere Zusatzfunktionen des Fahrzeugs gesteuert werden.

Weiterhin ist auf dem Bedienpult ein Betätigungselement 4 für die Lenkung angeordnet, das als eine um ihre Mittelachse drehbare Scheibe ausgeführt ist. Auf dem Betätigungselement 4 ist ein Griffelement 5 aufgesteckt, das erfindungsgemäß durch ein unterschiedlich gestaltetes Griffelement ausgetauscht werden kann.

Das in Fig. 1 dargestellte Griffelement 5, das erfindungsgemäß eine Auflagefläche für einen Handballen aufweist, ist in Figur 2 im Schnitt dargestellt. Das Griffelement wird mit einem Schaft 6 in des Betätigungselement 4 eingesteckt, wobei beispielsweise eine federbelastete Kugel in eine am Schaft 6 angeordnete Nut 10 einrasten kann, womit ein ungewolltes Herausfallen des Griffelements 5 verhindert wird. Auf dem Schaft 6 ist mittels einer axial und radial wirkenden Gleitlageranordnung 7 eine um eine Achse 13 drehbare Auflagefläche 8 für den Handballen befestigt. Die Bedienperson kann den Handballen auf die Auflagefläche 8 aufsetzen und das Betätigungselement 4 (Fig. 1) drehen. Ein Abrutschen des Handballens von der Auflagefläche 8 ist durch deren konkave Formgebung verhindert. Infolge der geringen Bauhöhe des Griffelements 5 wird die Bedienperson praktisch nicht behindert, wenn sie sich zum Handhaben einer Last über das Bedienpult beugt. Die Gefahr einer unbeabsichtigten Betätigung der Lenkungsvorrichtung ist ebenfalls minimiert.

In Figur 3 ist ein Knauf dargestellt, der mit seinem Schaft 9 alternativ zu dem in Fig. 2 dargestellten Griffelement in das Betätigungselement 4 (Fig. 1) eingesteckt werden kann. Ein Griffkörper 11 des Knaufs ist mittels einer Gleitlageranordnung 12 drehbar am Schaft 9 gelagert. Der Griffkörper 11 weist die bei Knäufen für Arbeitsmaschinen üblicher Formgebung auf und wird zur Betätigung der Lenkungsvorrichtung von oben mit der Hand umfaßt. Der Knauf wird bei dem Hochregalkommissionierer üblicherweise dann verwendet, wenn das Bedienpult hubgerüstseitig, also nicht zwischen der Bedienperson und der Last angeordnet ist.

## Patentansprüche

1. Bedienpult für ein Flurförderzeug, mit einem auf dem Bedienpult angeordneten Betätigungselement (4) für die Lenkung des Flurförderzeugs, wobei das Betätigungselement (4) drehbar um eine erste Achse an dem Bedienpult befestigt ist und an dem Betätigungselement (4) ein zumindest teilweise um eine zweite Achse drehbares Griffelement befestigbar ist, wobei die zweite Achse von der ersten Achse beabstandet ist und mindestens zwei unterschiedliche Griffelemente vorgesehen sind, die wahlweise an dem Betätigungselement (4) befestigbar sind, wobei ein erstes Griffelement vorgesehen ist, das als Knauf ausgebildet ist, **dadurch gekennzeichnet, daß**
- das Bedienpult einen bewegbaren Endabschnitt (2) zur Steuerung eines Fahrantriebs aufweist,
- das Betätigungselement (4) von einer um die erste Achse drehbaren Scheibe gebildet ist,
- und ein zweites Griffelement (5) vorgesehen ist, dessen Bauhöhe gegenüber dem Betätigungselement (4) höchstens 30 Millimeter beträgt.

2. Bedienpult nach Anspruch 1, **dadurch gekennzeichnet, daß** das zweite Griffelement (5) eine Auflagefläche (8) für den Handballen einer Bedienperson aufweist.

3. Flurförderzeug mit einem Bedienpult, mit einem auf dem Bedienpult angeordneten Betätigungselement (4) für die Lenkung des Flurförderzeugs, wobei das Betätigungselement (4) drehbar um eine erste Achse an dem Bedienpult befestigt ist und an dem Betätigungselement (4) ein zumindest teilweise um eine zweite Achse (13) drehbares Griffelement befestigbar ist, wobei die zweite Achse von der ersten Achse beabstandet ist, **dadurch gekennzeichnet, daß**
- das Bedienpult einen bewegbaren Endabschnitt (2) zur Steuerung eines Fahrantriebs aufweist,
- das Betätigungselement (4) von einer um die erste Achse drehbaren Scheibe gebildet ist,
- das Griffelement (5) eine Auflagefläche (8) für den Handballen einer Bedienperson aufweist und die Bauhöhe des Griffelements (5) gegenüber dem Betätigungselement (4) höchstens 30 Millimeter beträgt.

4. Flurförderzeug nach Anspruch 3, **dadurch gekennzeichnet, daß** die Auflagefläche (8) eine konkave Form aufweist.

5. Flurförderzeug nach Anspruch 3 oder 4, **dadurch gekennzeichnet, daß** die Auflagefläche (8) im wesentlichen senkrecht zur zweiten Achse ausgerichtet ist.

6. Flurförderzeug nach einem der Ansprüche 3 bis 5, **dadurch gekennzeichnet, daß** die Auflagefläche von der zweiten Achse im wesentlichen mittig geschnitten wird.

## Claims

1. Operating panel for an industrial truck, having an actuating element (4) arranged on the operating panel for the steering of the industrial truck, the actuating element (4) being fixed to the operating panel such that it can be rotated about the first axis, and it being possible for a handle element which can be rotated at least partly about a second axis to be fixed to the actuating element (4), the second axis being spaced apart from the first axis and at least two different handle elements which can be fixed as desired to the actuating element (4) being provided, a first handle element which is designed as a knob being provided, **characterized in that**
- the operating panel has a movable end section (2) for the control of a traction drive,
- the actuating element (4) is formed by a disc that can be rotated about the first axis,
- and a second handle element (5) is provided whose overall height with respect to the actuating element (4) is at most 30 millimetres.

2. Operating panel according to :Claim 1, **characterized in that** the second handle element (5) has a supporting surface (8) for the ball of the hand of an operator.

3. Industrial truck having an operating panel, having an actuating element (4) arranged on the operating panel for the steering of the industrial truck, the actuating element (4) being fixed to the operating panel such that it can be rotated about a first axis, and it being possible for a handle element that can be rotated at least partly about a second axis (13) to be fixed to the actuating element (4), the second axis being spaced apart from the first axis, **characterized in that**
- the operating panel has a movable end section (2) for the control of a traction drive,
- the actuating element (4) is formed by a disc that can be rotated about the first axis,
- the handle element (5) has a supporting surface (8) for the ball of the hand of an operator and the overall height of the handle element (5) with respect to the actuating element (4) is at most 30 millimetres.

4. Industrial truck according to Claim 3, **characterized in that** the supporting surface (8) has a concave shape.

5. Industrial truck according to Claim 3 or 4, **characterized in that** the supporting surface (8) is aligned substantially perpendicular to the second axis.

6. Industrial truck according to one of Claims 3 to 5, **characterized in that** the supporting surface is cut substantially centrally by the second axis.

## Revendications

1. Panneau de commande pour un chariot de manutention, comprenant un élément d'actionnement (4) disposé sur le panneau de commande pour la conduite du chariot de manutention, l'élément d'actionnement (4) étant fixé de manière à pouvoir tourner autour d'un premier axe sur le panneau de commande et un élément de préhension pouvant être fixé sur l'élément d'actionnement (4) de manière à pouvoir tourner au moins partiellement autour d'un deuxième axe, le deuxième axe étant espacé du premier axe et au moins deux éléments de préhension différents étant prévus, lesquels peuvent être fixés au choix sur l'élément d'actionnement (4), un premier élément de préhension étant prévu, lequel est réalisé en tant que tête,
**caractérisé en ce que**
- le panneau de commande présente une portion d'extrémité (2) mobile pour la commande d'un entraînement de conduite,
- l'élément d'actionnement (4) est formé par un disque pouvant tourner autour du premier axe,
- et un deuxième élément de préhension (5) est prévu, dont la hauteur de construction par rapport à l'élément d'actionnement (4) vaut au maximum 30 millimètres.

2. Panneau de commande selon la revendication 1, **caractérisé en ce que** le deuxième élément de préhension (5) présente une face d'appui (8) pour les éminences thénar et hypothénar d'un opérateur.

3. Chariot de manutention comprenant un panneau de commande avec un élément d'actionnement (4) disposé sur le panneau de commande pour la conduite du chariot de manutention, l'élément d'actionnement (4) étant fixé de manière à pouvoir tourner autour d'un premier axe sur le panneau de commande et un élément de préhension pouvant être fixé sur l'élément d'actionnement (4) de manière à pouvoir tourner au moins partiellement autour d'un deuxième axe (13), le deuxième axe étant espacé du premier axe, **caractérisé en ce que**
- le panneau de commande présente une portion d'extrémité (2) mobile pour la commande d'un entraînement de conduite,
- l'élément d'actionnement (4) est formé par un disque pouvant tourner autour du premier axe,
- l'élément de préhension (5) présente une face d'appui (8) pour les éminences thénar et hypothénar d'un opérateur et la hauteur de construction de l'élément de préhension (5) par rapport à l'élément d'actionnement (4) vaut au maximum 30 millimètres.

4. Chariot de manutention selon la revendication 3, **caractérisé en ce que** la face d'appui (8) présente une forme concave.

5. Chariot de manutention selon la revendication 3 ou 4, **caractérisé en ce que** la face d'appui (8) est orientée essentiellement perpendiculairement au deuxième axe.

6. Chariot de manutention selon l'une quelconque des revendications 3 à 5, **caractérisé en ce que** la face d'appui est coupée essentiellement en son milieu par le deuxième axe.
